# EUROPEAN PATENT SPECIFICATION

(11) **EP 0 742 770 B1**
(45) Date of publication and mention of the grant of the patent: **07.01.1998**
(21) Application number: 95909143.0
(22) Date of filing: 08.02.1995
(51) Int. Cl.: B62D 65/00, B62D 29/04

(54) **VEHICLE BODY**
WAGENKASTEN
CAROSSERIE DE VEHICULE

(30) Priority: 09.02.1994 NO 940437
(43) Date of publication of application: 20.11.1996
(73) Proprietor: A.S. RINGDAL PATENTER, 0975 Oslo (NO)
(72) Inventor: RINGDAL, Lars, deceased (NO); RINGDAL, Jan, Otto, N-0389 Oslo (NO)
(74) Representative: Cline, Roger Ledlie
(86) International application number: NO9500028
(87) International publication number: WO9521762

(56) References cited:
- EP-A- 0 547 583
- WO-A-91/01910
- US-A- 3 550 948
- US-A- 4 428 599
- US-A- 4 521 049

## Description

The invention concerns a method for the production of a vehicle, wherein the vehicle has a rigid, supporting framed structure and a body of plastic, with bottom, front and back parts and a roof in the case of a closed vehicle.

Vehicles, and especially cars, have traditionally been constructed of steel as the principal material and are therefore designed according to the design criteria and production methods which form the basis for the utilization of this material. This design has traditionally been based on a rigid bottom frame and body panels which have been assembled on this bottom frame. New designs have subsequently been developed using so-called self-supporting bodies, i.e. with an integrated assembly of body plates and internal, matching plates which are assembled so as to provide a self-supporting and strong structure. The engine, suspension, wheels and all the necessary equipment were then installed on and inside this structure. A further development has taken place in which attempts have been made to find other types of material and in this connection aluminium has been considered as a construction material as well as body parts of plastic. These changes of material, however, have not resulted in any significant changes in design type and the vehicles, and especially cars, which are built to-day are still mainly based on the technology which was based on steel as the building material.

Thus in connection with the further development of vehicle design there has been a need to develop new production methods which provide simpler construction and which are better suited to new and other types of material.

The object of the present invention, therefore, is to provide a new production method for vehicles, wherein the method of production of the vehicle is developed on the basis of those materials which are employed and where a simpler, faster, more efficient and preferably also a more reasonably priced production is achieved. In particular it has been an object of the invention to provide a method which is especially well suited to the production of small, light vehicles, e.g. electric cars. This object is achieved with a method of the type mentioned in the introduction, which is characterized by the features in the patent claims.

In the present invention an entirely new starting-point is taken for the production of a vehicle and untraditional design criteria, modern materials as well as production methods have been used which thus far have not been employed in connection with vehicle production. The basis of the invention is to build up a rigid, supporting frame, e.g. according to the principle which in recent times has also been considered by the car industry, viz. the so-called "space-frame" system. In the main this system uses extruded aluminium profiles which are assembled in a suitable manner and adapted to one another for a practical and rational installation, the profiles being designed to provide the appropriate strength and deformation conditions. The construction may also include outer elements which are visible in the finished construction. On a bottom frame there is built up a framework, also preferably of extruded aluminium profiles, which constitute a supporting structure and will form a kind of reinforced cage around the vehicle's cabin. In an open vehicle this framework will be adapted to suit this open design. The design will give access for attaching the other mechanical components and the system which is necessary for the final vehicle both with regard to its operation and in connection with the safety of the vehicle. To the bottom frame there are therefore attached suspension systems, driving wheels, a steering unit, possibly a drive unit and drive energy supply, etc., according to requirements. The actual cabin or the body of the vehicle is made of plastic. It has been shown to be particularly advantageous to use thermoplastic ductile plastic material which preferably includes a total body including bottom, side walls, front and back parts and the roof in the case of a closed vehicle. Alternatively this body can be made of a plurality of parts or plates in such a manner that the assembly is performed in a separate operation before the actual mounting on the bottom part of the frame.

The invention will now be explained in more detail by means of an embodiment, which is illustrated in the drawing, in which:
Figure 1 illustrates the three main components of a vehicle before these are assembled according to the invention,
figure 2 is a schematic illustration of the assembled vehicle and
figure 3 illustrates another design of the vehicle's frame parts.

The drawing presents a purely schematic illustration of the main concept of the invention. The way in which the principal part is constructed is therefore not illustrated in any detail, since known methods will be employed for this purpose. Thus a number of methods and devices exist for the production of a framework of, e.g., aluminium profiles and the individual features which will be included in such a framework are also not described in any detail, there being many possibilities here within the scope of the invention. The underbody of the frame will therefore be designed with deformation zones in order to secure the vehicle in case of collision, and reinforcing elements of various kinds will also be included. It will be possible for a person skilled in the art to vary these design features. With regard to the actual body, as already stated this is preferably made of thermoplastic and can, e.g., be manufactured by means of rotational moulding, as in the case of, e.g., small boats and the like. It is an advantage for the plastic to be coloured throughout.

The vehicle's framed structure is composed of a frame bottom part 1 and a frame upper part 2. The vehicle's plastic body which is preferably formed in one piece, but which may be prefabricated of several elements, is generally indicated by 3. The shape of the frame bottom part 1 will be dependent on the type of vehicle which has to be produced. In general, however, this bottom part will be equipped with at least one set of upwardly projecting posts 4,5. The posts are in pairs on the two sides of the vehicle and will subsequently form the attachment points for the body, preferably on both sides of the location which will form the door opening in the body.

The vehicle body 3 is mounted on the frame bottom part 1. The former is located on the frame bottom part 1 in such a manner that the bottom of the body will abut against the frame bottom part and partially rest on it and be supported by it. As mentioned, the body 3 is designed with a complete bottom and will thereby lie sealingly against the base. Before the body 3 is mounted, necessary equipment, such as the suspension system, steering, the engine and wheel suspension are mounted on the bottom part 1.

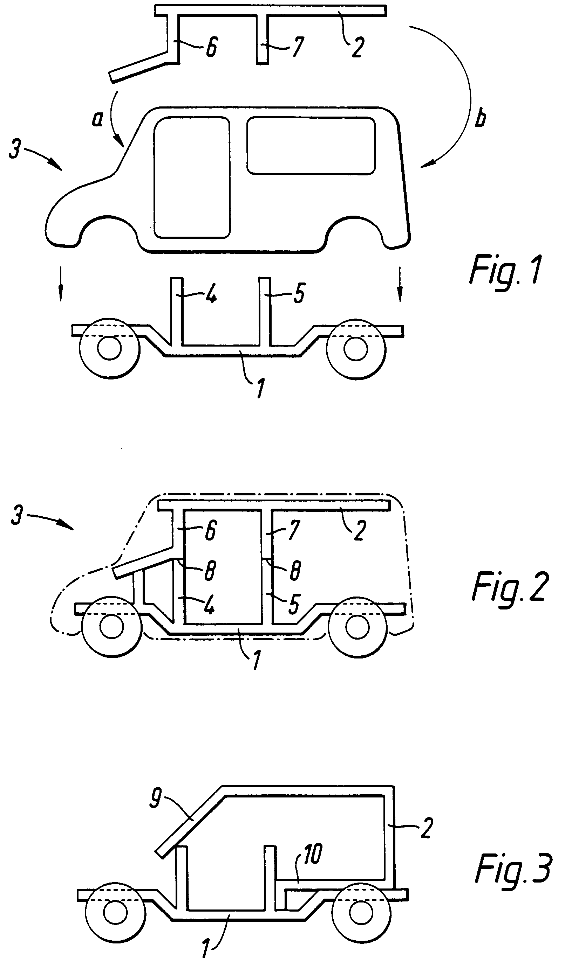

After the body 3 is in position, the upper frame part 2 is mounted. This is illustrated schematically in figure 1. This part preferably also has at least one set of posts which project downwards and which are indicated by 6 and 7. These posts are designed to be brought into abutment against the posts 4 and 5. The frame part 2 is inserted into the body part by being passed in through the window opening as illustrated by arrow A or in through a planned rear opening as indicated by arrow B. In other words the frame upper part is adapted in such a manner that it will be able to be passed into the body. In order to obtain the desired reinforced cage for a closed vehicle, posts 4 and 6 and 5 and 7 are joined together, e.g. by welding, riveting, bolting or by means of securing flanges or nuts, thus providing a rigid construction. This can be done very rapidly and efficiently since there are only two frame parts which have to be joined together. Further reinforcements may be provided or further posts can be provided on the frame parts or other construction beams in order to provide further reinforcement in the rear section or the front section.

Figure 2 illustrates schematically how the framed structure will be located in the body, which is indicated here by dotted lines. The point of attachment is indicated by 8. In an open construction the upper part of the upper framed structure can be omitted, with reinforcements only around the windscreen and possibly a roll bar at the rear post 5. Other reinforcing elements may also be attached according to the nature of the construction.

Figure 3 illustrates a possible design wherein the upper frame part does not have downwardly projecting posts in the same manner as in figures 1 and 2, but is designed with different kinds of reinforcing elements. At the front edge there is an oblique reinforcing post 9, which constitutes a fastening for front windows, while at the rear edge there is mounted a profile beam 10, which supports the rear edge of the vehicle and is also attached to the frame bottom part 1 at a point further forward. A design of this kind can be suitable for securing, e.g., a push-in box for batteries or the like. Many modifications will be possible within the scope of the invention. In figures 1 and 2 the posts are indicated as approximately vertical, but they can, of course, also form an angle, even in relation to each other. With regard to the actual joining of the body and the framed structure, several alternatives exist. The most advantageous is the use of the hooking together design which is described in the applicant's Norwegian patent application no. 893155 wherein by means of hooking and clamping means a simple clamping and securing of the plastic body's open edge to the framed structure's profile beam is performed. Thus the body can be firmly secured to the framed structure by simple means. With the illustrated post construction excellent reinforcement with easy access for joining will thereby be obtained in the door opening, while at the same time the posts constitute the beams required for attachment of the doors. Thus there will always be a need for an upwardly projecting post and bottom part of the framed structure for mounting of doors, regardless of whether an open or a closed body is involved.

## Claims

1. A method for production of a vehicle, wherein the vehicle has a rigid, supporting framed structure and a body (3) of plastic including the bottom, front and back parts and the roof in the case of a closed vehicle,
**characterized in** that by known per se means there are produced:
- a frame bottom part (1) which is designed with at least one set of posts (4, 5) projecting up from the bottom part, preferably two sets, which are mounted at the location for the doors, preferably at the front edge and rear edge of the door openings,
- an upper frame part (2) which is designed with hoops, window frames etc. according to requirements and with downwardly projecting posts (6, 7), corresponding to the posts in the bottom part, or other elements for reinforcement against the bottom part,
- a plastic body (3), preferably moulded in one piece, after which there are mounted on the frame bottom part the parts necessary for operation of the vehicle, such as suspension, wheels, steering system, engine, etc., the plastic body is placed on the frame's bottom part in such a manner that the posts will be located at the door openings, the frame upper part is then inserted into the body part through a suitable opening or from above in the case of an open body, in such a manner that the posts on the upper part and bottom part will abut against each other, the upper parts supporting element abutting against the bottom part, and the upper part and bottom part are joined together,
- and the edges of the plastic body are attached to the framed structure at a number of points which will secure the connection between the parts.

2. A method according to claim 1,
**characterized in** that the upper part is inserted into the body part through the windscreen opening, or through a rear opening.

3. A method according to claim 1,
**characterized in** that in the case of an open body the upper part is moved straight down to abut against the bottom part's posts and that the upper part is designed with the required beams for windows, windscreen, safety reinforcement, etc.

4. A method according to claim 1,
**characterized in** that the posts or supporting elements for the upper part and the bottom part are attached to each other by welding, riveting, screwing or with securing flanges/fixing sleeves.

5. A method according to claim 1,
**characterized in** that there is employed a frame upper part which is divided into several sections.

6. A method according to claim 1,
**characterized in** that the body is made of a thermoplastic ductile plastic material, preferably constructed in one piece.

7. A method according to claim 6,
**characterized in** that the body is manufactured by rotational moulding.

8. A method according to claim 1,
**characterized in** that the body is made of several parts which are assembled before mounting.

9. A method according to claim 1,
**characterized in** that the frame parts are made of aluminium profiles.

## Patentansprüche

1. Verfahren zur Herstellung eines Fahrzeuges, bei dem das Fahrzeug eine starre, tragende Rahmenkonstruktion und eine Karosserie (3) aus Kunststoff aufweist, die die unteren, vorderen und hinteren Teile sowie das Dach im Falle eines geschlossenen Fahrzeuges umfaßt;
dadurch gekennzeichnet, daß mittels der per se bekannten Einrichtungen hergestellt werden:
ein unteres Rahmenteil (1), das mit mindestens einem Satz Stützsäulen (4, 5) ausgeführt ist, die aus dem unteren Teil herausragen, vorzugsweise zwei Sätze, die an der Stelle für die Türen montiert werden, vorzugsweise an der Vorderkante und der Hinterkante der Türöffnungen;
ein oberes Rahmenteil (2), das mit Bügeln, Fensterrahmen, usw. entsprechend den Anforderungen und mit nach unten herausragenden Stützsäulen (6, 7), die den Stützsäulen im unteren Teil entsprechen, oder anderen Elementen für eine Verstärkung am unteren Teil ausgeführt ist;
eine Karosserie (3) aus Kunststoff, die vorzugsweise in einem Stück geformt wird;
wonach auf dem unteren Rahmenteil die Teile montiert werden, die für den Betrieb des Fahrzeuges erforderlich sind, wie beispielsweise die Aufhängung, die Räder, das Lenksystem, der Motor, usw., die Karosserie aus Kunststoff auf dem unteren Rahmenteil so angeordnet wird, daß die Stützsäulen in den Türöffnungen angeordnet werden, das obere Rahmenteil danach in das Karosserieteil durch eine geeignete Öffnung oder von oben im Fall einer offenen Karosserie so eingesetzt wird, daß die Stützsäulen am oberen Teil und am unteren Teil gegeneinander stoßen werden, wobei das die oberen Teile tragende Element gegen das untere Teil stößt, und das obere Teil und das untere Teil miteinander verbunden werden;
und daß die Ränder der Karosserie aus Kunststoff an der Rahmenkonstruktion an einer Anzahl von Stellen befestigt werden, die die Verbindung zwischen den Teilen sichern werden.

2. Verfahren nach Anspruch 1, dadurch gekennzeichnet, daß das obere Teil in das Karosserieteil durch die Windschutzscheibenöffnung oder durch eine hintere Öffnung eingesetzt wird.

3. Verfahren nach Anspruch 1, dadurch gekennzeichnet, daß im Falle einer offenen Karosserie das obere Teil geradlinig nach unten bewegt wird, um gegen die Stützsäulen des unteren Teils zu stoßen, und daß das obere Teil mit den erforderlichen Trägern für die Fenster, die Windschutzscheibe, die Sicherheitsverstärkung, usw. ausgeführt ist.

4. Verfahren nach Anspruch 1, dadurch gekennzeichnet, daß die Stützsäulen oder die tragenden Elemente für das obere Teil und das untere Teil aneinander durch Schweißen, Nieten, Schrauben oder mit Hilfe von Sicherungsflanschen/Befestigungsmuffen befestigt werden.

5. Verfahren nach Anspruch 1, dadurch gekennzeichnet, daß ein oberes Rahmenteil eingesetzt wird, das in mehrere Abschnitte unterteilt ist.

6. Verfahren nach Anspruch 1, dadurch gekennzeichnet, daß die Karosserie aus einem thermoplastischen verformbaren Kunststoffmaterial hergestellt wird, wobei sie vorzugsweise in einem Stück hergestellt wird.

7. Verfahren nach Anspruch 6, dadurch gekennzeichnet, daß die Karosserie durch Rotationsformen hergestellt wird.

8. Verfahren nach Anspruch 1, dadurch gekennzeichnet, daß die Karosserie aus mehreren Teilen hergestellt wird, die vor der Montage zusammengebaut werden.

9. Verfahren nach Anspruch 1, dadurch gekennzeichnet, daß die Rahmenteile aus Aluminiumprofilen hergestellt werden.

## Revendications

1. Procédé de production d'un véhicule, dans lequel le véhicule comprend une structure de châssis rigide porteuse et une carrosserie (3) en plastique incluant les parties du fond, de l'avant et de l'arrière, et le toit dans le cas d'un véhicule fermé;
caractérisé en ce qu'on produit, grâce à des moyens connus en tant que tels:
une partie de châssis inférieure (1) pourvue d'au moins un ensemble de montants (4, 5) saillant vers le haut depuis la partie inférieure, de préférence deux ensembles, qui sont montés à l'endroit prévu pour les portes, de préférence au niveau des bords antérieur et postérieur des ouvertures de portes,
une partie de châssis supérieure (2) pourvue d'arceaux, de cadres de fenêtres, etc, selon les besoins, et de montants (6, 7) saillants vers le bas et correspondant aux montants de la partie inférieure, ou d'autres éléments destinés au renforcement par rapport à la partie inférieure,
une carrosserie en plastique (3), de préférence un moulage monocoque,
après quoi les pièces nécessaires à la marche du véhicule, telles que la suspension, les roues, le système de direction, le moteur, etc, sont montées sur la partie de châssis inférieure, la carrosserie en plastique est montée sur la partie inférieure du châssis de telle sorte que les montants soient situés aux ouvertures de portes, la partie de châssis supérieure est alors insérée dans la partie de carrosserie par une ouverture appropriée ou par le dessus dans le cas d'une carrosserie ouverte, de telle sorte que les montants de la partie supérieure et de la partie inférieure viennent en aboutement les uns contre les autres, l'élément de support de la partie supérieure butant contre la partie inférieure, et les parties supérieure et inférieure sont assemblées,
et les bords de la carrosserie en plastique sont fixés à la structure de châssis en un nombre de points qui vont assurer la connexion entre les parties.

2. Procédé selon la revendication 1, caractérisé en ce que la partie supérieure est insérée dans la partie de carrosserie par l'ouverture du pare-brise ou par une ouverture arrière.

3. Procédé selon la revendication 1, caractérisé en ce que, dans le cas d'une carrosserie ouverte, la partie supérieure est descendue tout droit pour venir en aboutement contre les montants de la partie inférieure, et en ce que la partie supérieure est pourvue des longerons nécessaires pour les fenêtres, le pare-brise, les éléments de renforcement de sécurité, etc.

4. Procédé selon la revendication 1, caractérisé en ce que les montants ou éléments de support pour la partie supérieure et la partie inférieure sont fixés les uns aux autres par des soudures, des rivets, des vis ou des brides/manchons de fixation.

5. Procédé selon la revendication 1, caractérisé en ce que l'on utilise une partie de châssis supérieure qui est divisée en plusieurs sections.

6. Procédé selon la revendication 1, caractérisé en ce que la carrosserie est formée d'une matière thermoplastique ductile et est faite, de préférence, d'une seule pièce.

7. Procédé selon la revendication 6, caractérisé en ce que la carrosserie est fabriquée par rotomoulage.

8. Procédé selon la revendication 1, caractérisé en ce que la carrosserie est formée de plusieurs parties qui sont assemblées avant le montage.

9. Procédé selon la revendication 1, caractérisé en ce que les parties de châssis sont formées par des profilés en aluminium.
